Europäisches Patentamt

(19) European Patent Office

Office européen des brevets

(11) EP 0 626 354 B1

(12) EUROPEAN PATENT SPECIFICATION

(45) Date of publication and mention
of the grant of the patent:
**06.08.1997 Bulletin 1997/32**

(51) Int. Cl.$^6$: **C03C 17/38**, B44C 1/14, C09D 11/10

(21) Application number: **93304160.0**

(22) Date of filing: **28.05.1993**

(54) **Hot-stamping glass**

Heissprägung auf Glas

Estampage à chaud sur du verre

(84) Designated Contracting States:
**AT BE CH DE DK ES FR GB GR IE IT LI LU NL PT SE**

(43) Date of publication of application:
**30.11.1994 Bulletin 1994/48**

(73) Proprietor: **Revlon Consumer Products Corporation**
**New York, NY 10022 (US)**

(72) Inventors:
  • **Kamen, Melvin Edwin**
    **Highlands, New Jersey 07732 (US)**
  • **Patel, Bhupendra**
    **Edison, New Jersey 08820 (US)**
  • **Bernstein, Philip**
    **Yardley, Pennsylvania 19067 (US)**

(74) Representative: **Sanderson, Laurence Andrew et al**
**SANDERSON & CO.**
**European Patent Attorneys**
**34, East Stockwell Street**
**Colchester Essex CO1 1ST (GB)**

(56) References cited:
EP-A- 0 106 628

  • **DATABASE WPI Section Ch, Week 8448, Derwent Publications Ltd., London, GB; Class L, AN 84-297751 & JP,A,59 184 746 (KOA GLASS KK) 20 October 1984**
  • **PATENT ABSTRACTS OF JAPAN vol. 6, no. 260 (M-180) 18 December 1982 & JP,A,57 152 992 (KAMAYA KAGAKU KOGYO KK) 21 September 1982**
  • **PATENT ABSTRACTS OF JAPAN vol. 14, no. 90 (C-691) 4033 20 February 1990 & JP-A-01 301 535 (HAYAKAWA RUBBER CO LTD) 05 December 1989**
  • **RESEARCH DISCLOSURE, no.328, August 1991, EMSWORTH GB page 618 'Photoinitiator Combinations for UV Curable Screen Printing Inks'**
  • **CHEMICAL ABSTRACTS, vol. 93, no. 24, 15 December 1980, Columbus, Ohio, US; abstract no. 224638x, page 253 ; & JP,A,55 023 222 (KAMAYA KAGAKU KOGYO K.K.) 21 June 1980**
  • **PATENT ABSTRACTS OF JAPAN vol. 12, no. 218 (M-711) 22 June 1988 & JP,A,63 017 075 (HINO JUSHI KK) 25 January 1988**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to the application of decorative coatings to glass, by a procedure akin to that known as hot-stamping.

The known hot-stamping procedure involves using a heated die or roller to apply both heat and pressure to a so-called foil, consisting of a pigmented color or metallized surface film borne on an usually-polyester carrier, so as to force it into contact with thermoplastic substrate, and thereby soften the thermo plastic substrate and also activate the film-coating on the foil, thereby enabling it to form a strong physico-chemical bond with the underlying thermoplastic substrate wherever heat and pressure have been applied to the foil, but not elsewhere. When subsequently the foil is pulled away, just the areas of the film which have been subjected to the hot-stamping remain affixed to the plastic substrate, and the remainder peels away. In order to carry out this operation one normally employs either a vertical stamping or a roll-on machine. The vertical stamping machine contains a heated die of brass, steel or silicone rubber, which serves to apply both heat and pressure and thus to transfer the desired pattern (whatever that may be - thus decorative areas and/or writing or other printed information) of the film on to the plastic substrate, as each part is positioned beneath the die. Roll-on methods utilize a silicone rubber roller or an arcuate die to transfer the desired pattern from the foil on the thermoplastic substrate in either a continuous or a batch process.

Hot-stamping is an efficient and inexpensive way to apply decoration to thermoplastic substrates. Unfortunately however hot-stamping of this nature cannot be used with glass, because glass melts at a much higher temperature than most thermoplastic materials. Consequently decoration in the form of gold leaf, color design or printing etc. is generally applied to glass containers by a glazing process similar to that used with ceramics. Thus for example in gold-leafing the gold decoration is applied to the glass container by a variety of methods such as or akin to silk screen printing, etc. The glass container is then subjected to extremely high kiln temperatures, and in essence the decoration is baked on. Unfortunately this process is however time-consuming, expensive, energy-intensive and gives rise to safety considerations due to the high temperatures that have to be employed and the nature of the gases which are involved in the operation of the kilns.

There is thus a great need for a simple, economical and ultra-safe procedure for applying decoration to glass substrates. Alternative procedures having something in common with the new procedure we have now devised were described in Japanese Patent Publications No. JP-A 59 184 746 and No. JP-A 57 152 992. As there described, a pattern of decoration is first applied in adhesive ink to the glass surface to be decorated, then the ink pattern is irradiated with UV-light to semi-cure the ink and thus render it tacky, after which hot-stamping foil is applied to the tacky ink pattern, and finally the semi-cured ink is further irradiated with UV-light from behind, thus through the glass, in order to complete the curing of the ink and thereby firmly adhere the hot-stamping foil to the glass surface via the interposed layer of now-fully-cured adhesive ink.

We however have now devised a method for applying decoration to glass substrates by means of hot-stamping foil which involves only a single, complete ink-curing operation and avoids all the difficulties and inadequacies of the back-irradiation of the ink through the glass.

According to this invention there is provided a method for applying a decorative coating to glass, which comprises the steps of:

a) applying an adhesive ink in the form of a radiation-curable polymeric composition to the glass in a predetermined pattern of decoration;
b) completely curing the adhesive ink by exposing it upon the glass to direct irradiation with the radiation by which it is curable, thereby bonding the ink to the glass;
c) compressing a foil bearing a film of decorative material against the glass with a compress heated to a temperature of at least 395K (250°F) and sufficient to adhere the film of decorative material to the cured ink pattern; and
d) on removal of the compress peeling off the foil whereby the decorative film thereon remains permanently adhered to the adhesive ink pattern only.

A wide variety of glass containers may be provided with a decorative coating by means of the method of this invention, including for instance bottles, dishes, cups and glasses - and so far as we are aware there is no limit on the kind of glass that may thus be decorated.

In the first step, the desired decorative or other pattern is essentially "painted" onto the glass utilizing an adhesive ink as the "paint". The "painting" may be accomplished by silk screening, stenciling, actual painting or any other of the wide variety of available methods. We currently prefer to apply the desired pattern of adhesive ink by silk-screening it onto the glass container, utilizing the traditional screen and squeegee well known to those skilled in the art.

The adhesive ink employed in the method must be a curable polymeric composition, and we believe that it should very desirably contain at least a monomer, a polymer dissolved in the monomer, and a polymerization-initiating agent. The adhesive ink may however advantageously also contain other useful ingredients, e.g. silanes may be included to improve adhesion.

Suitable monomers include isobornyl acrylate, urethane methacrylate, urethane acrylate, tetrahydrofurfuryl acrylate, acrylic resins, aromatic urethane acrylic resin, etc.

A wide variety of polymers can be utilized, including for instance polyethylmethacrylate, polymethylmethacrylate, polyurethane, polyester acrylates, epoxy acrylates, etc.

Equally, a wide variety of polymerization-initiators may be utilized, including initiators activated by heat, by various chemicals or by actinic radiation, often in the ultraviolet spectrum.

Photo-initiators suitable for use with actinic radiation include 1-hydroxycyclohexylphenylketone, 2,2-dimethoxy-2-phenyl acetophenone, diethoxyacetophenone and 2-methyl-1-(methylthiophenyl)-2-(4-morpholinyl)-1-propanone.

In our preferred procedure the monomer is isobornyl acrylate or urethane methacrylate, and/or the preferred polymer is polyethylmethacrylate, and/or the preferred photo-initiator is 1-hydrocyclohexylphenylketone - the latter being marketed under the tradename Irgacure 184 (Ciba-Geigy, Hawthorne, NY).

It is desirable to include a silane, specifically 3-glycidoxy-propyl trimethyl silane, in the adhesive ink. Silane is a known coupling agent with glass, and will increase bond strength.

Generally the monomer concentration will be in the range of from 20 to 90%; the polymer concentration will be in the range of from 10 to 35%; and the photo-initiator concentration will be in the range of from about 3 to 10%. If silane is added to the composition, we recommend the use of from about 1 to 10%.

Other ancillary ingredients may be added to the composition for particular purposes, e.g. to enhance adhesion and/or to improve the cure rate and/or for other reasons, such as acrylic acid derivatives, stabilizers, inert fillers and so on.

It can for some purposes be advantageous to include pigments in the adhesive ink. The pigmented ink may still be silk screened or painted onto the glass container and cured as usual. The inclusion of pigment in the adhesive ink has certain advantages - firstly that it renders the adhesive ink more readily visible after application to the glass, and secondly that the use of pigmented ink in conjunction with the use of foil can enable one to provide a two-tone effect. Suitably-colored pigmented adhesive inks can be made by simply adding an appropriate amount e.g. from 1 to 20%, of the chosen pigment to the adhesive ink composition. Thus for instance colored adhesive inks can be made by adding say 10% of titanium dioxide to the composition so as to color it white, or by adding say 15% of carbon black to the composition so as to color it black.

As mentioned previously, the adhesive ink must be cured in situ, after it has been applied to the glass substrate. Curing is effected in whatever manner is appropriate. This will usually be dependent on the type of polymerization-initiator used. If one uses radiation-sensitive photo-initiators which are sensitive to actinic radiation, then the adhesive may readily be cured by passing the decorated container under the appropriate intensity of ultraviolet light. We currently prefer to employ an adhesive ink which is curable by actinic radiation, so the containers can be passed under ultraviolet light using a conventional UV conveyer.

After the desired pattern of adhesive ink on the container has been cured, then the foil bearing the film of the desired gold, silver or other decorative material is compressed against the container by means of a stamp, roller or any other suitable compress. The stamp must be heated to a temperature of at least 395K (250°F), and it must also be compressed tightly against the foil-covered glass container. It is possible for this purpose to use a hand-held heated roller such as those made by Silicon Limited, Lancaster, New York State, United States of America.

The roller or stamp should be used to compress the foil against the container for such period as is necessary, but we have found that a period of from 1 to 3 seconds will usually suffice.

When the roller is removed and the foil is peeled away, the film adheres only to the portion of the container decorated with the adhesive ink.

As will be seen, the method of providing a foil decoration on glass substrates according to this invention is simply and inexpensive, above all because it eliminates the need to employ high-temperature kilns and the like to accomplish decorative designs on glass containers.

According to another aspect of this invention we also provide glass substrates decorated by the methods herein disclosed.

In order that the invention may be well understood it will now be further described in more detail, though only by way of illustration with reference to the following examples:

Example 1: Preparation of UV-curable adhesive ink, and subsequent hot-stamping of glass containers therewith

37.5 Grams of isobornyl acrylate (Borden Chemical Co., Cincinnati, Ohio, United States of America) and 12.5 grams of Elvacite 2-13 (Dupont Co., Wilmington, Delaware, United States of America) were mixed together and warmed in a microwave oven for one minute (or if necessary longer) until the Elvacite was completely dissolved in the isobornyl acrylate. 2.5 Grams of a photo-initiator known as Irgacure 184 were then added and mixed in until dissolved.

The adhesive ink obtained as described above was used to silk-screen designs onto a glass container. The screen consisted of a 255 line (39.8 fibers/cm$^2$ = 255 fibers/square inch) screen, with the desired decorative design imprinted on it. The imprinted screen was brushed over with a squeegee, resulting in a glass container with the desired pattern of ink decoration thereon.

The adhesive ink was cured utilizing a 300 watt 0.152 cms$^{-1}$ (30 feet/minute) UV conveyer. The glass container was passed through the conveyer from one to three times, so as to achieve an appropriate degree of curing of the polymer.

Gold-colored hot-stamping foil (Crown, Royal Leaf, Paterson, New Jersey, United States of America) was then compressed against the container, utilizing a heated hand-held roller (Silicon Limited, Lancaster, New York State, United States of America). The heated roller was applied for a few seconds, and then the foil was peeled away. The decorative film on the foil adhered only to the previously-formed pattern of adhesive ink.

In this manner an excellent, smooth-surfaced decoration with no irregularities was successfully applied to the glass container.

### Example 2: Preparation of UV-curable adhesive ink

An adhesive composition was formulated as follows:

| | |
|---|---|
| Aromatic urethane methacrylate (Ebecryl 6700, RadCure Specialities, Atlanta, Georgia, U.S.A.) | 55 grams |
| Tetrahydrofurfuryl acrylate (Sartomer 203, Exton, Pennsylvania, U.S.A.) | 20 grams |
| Isobornyl acrylate (Sartomer 506, Exton &c) | 20 grams |
| Defoaming agent (BYK-052, Ciba-Geigy, Hawthorne, New York State, U.S.A.) | 0.5 grams |
| Photo-initiator (Irgacure 184) | 5 grams |
| | 100.5 grams |

The ingredients of this composition were mixed together in the same manner as set forth in Example 1, to form an adhesive ink. The adhesive ink formulation was then transferred in a desired pattern onto a glass slide, utilizing a silk-screening method. The adhesive ink was then cured, utilizing a UV conveyer with a 300 watt lamp and a speed of 0.152 ms$^{-1}$ (30 feet/minute); and it was found that four passes through this UV conveyer were needed fully to cure the adhesive ink.

The formulation was smooth and the cure time acceptable, but adherence of the gold foil after the hot-stamping process was spotty.

### Example 3: Preparation of adhesive ink

A UV curable adhesive ink composition was formulated as follows:

| | |
|---|---|
| Isobornyl acrylate (Sartomer 203) | 24 grams |
| Urethane acrylate (Sartomer 9625) | 17 grams |
| Aromatic urethane acrylate (Ebecryl A 827, RadCure) | 5 grams |
| Aromatic urethane acrylate (Ebecryl 6700, Radcure) | 11 grams |
| Photo-initiator (Irgacure 184) | 2.5 grams |
| Wetting agent (BYK-501 , Union Carbide) | 0.5 grams |
| Wetting agent (FC 171, Union Carbide) | 0.5 grams |
| Levelling agent (A 151, Union Carbide) | 0.5 grams |
| | 61 grams |

The adhesive ink thus formulated was transferred onto a glass container in the desired pattern using a silk-screening process. The ink thus applied was smooth, provided a surface without irregularities, and adhered well to the glass.

Example 4: Preparation of adhesive ink

An adhesive ink composition was formulated as follows:

| | |
|---|---|
| Loctite 36331 (Loctite Corpn., Newington, Connecticut, U.S.A.) | 75 grams |
| Polymethylmethacrylate (Elvacite 2043, DuPont Corpn., Wilmington, Delaware, U.S.A.) | 25 grams |
| Photo-initiator (Irgacure 184) | 2 grams |
| | 102 grams |

This composition was mixed for about one hour in a mixer. The ink was then transferred in the desired pattern by silk-screening, using a 255 line screen, onto a glass container. The adhesive was cured by four passes through a 300 watt 0.152 ms$^{-1}$ (30 feet/minute) UV conveyer.

The surface was a bit bumpy and uneven after hot-stamping.

Example 5: Preparation of adhesive ink

An adhesive ink composition was formulated as follows:

| | |
|---|---|
| Urethane methacrylate | 27 parts |
| High boiling methacrylate resin | 55 parts |
| Acrylic acid | 5 parts |
| Hydroxyethylmethacrylate | 5 parts |
| Photo-initiator | 5 parts |
| Substituted silane (Dow Corning, Huls Silane Ester "Scatterway") | 3 parts |

The resulting formulation provides an excellent, easily-curable adhesive ink which works well with hot-stamping.

## Claims

1. A method for applying a decorative coating to glass which comprises the steps of:

   a) applying an adhesive ink in the form of a radiation-curable polymeric composition to the glass in a predetermined pattern of decoration;
   b) completely curing the adhesive ink by exposing it upon the glass to direct irradiation with the radiation by which it is curable, thereby bonding the ink to the glass;
   c) compressing a toil bearing a film of decorative material against the glass with a compress heated to a temperature of at least 395K (250°F) and sufficient to adhere the film of decorative material to the cured ink pattern; and
   d) on removal of the compress peeling off the foil whereby the decorative film thereon remains permanently adhered to the cured ink pattern only.

2. A method as claimed in claim 1, in which the foil used is gold hot-stamping foil or silver hot-stamping foil.

3. A method as claimed in claim 1 or claim 2, in which the radiation-curable adhesive ink comprises a monomer, a polymer dissolved in the monomer, and a radiation-activated photo-initiator.

4. A method as claimed in claim 3, in which the photo-initiator is one activated by actinic radiation.

5. A method as claimed in claim 3 or claim 4, in which the photo-initiator is one activated by ultraviolet radiation.

6. A method as claimed in any of claims 3 to 5, in which the photo-initiator is or includes: 1-hydroxycyclohexylphenylketone, 2,2-dimethoxy-2-phenyl acetophenone, diethoxyacetophenone and/or 2-methyl-1 (methylthiophenyl)-2-(4-morpholinyl)-1-propanone.

7. A method as claimed in any claims 3 to 5, in which the photo-initiator is 1-hydroxycyclohexylphenylketone.

8. A method as claimed in any of claims 3 to 7, in which the radiation-curable adhesive ink composition comprises:

    a) from 20 to 90% of the monomer;
    b) from 10 to 35% of the polymer dissolved in the monomer; and
    c) from 3 to 10% of the photo-initiator;

    all these percentages being by weight of the total composition.

9. A method as claimed in any of claims 3 to 8, in which the monomer is or includes isobornyl acrylate, urethane methacrylate, urethane acrylate, tetrahydrofurfuryl acrylate, acrylic resins and/or aromatic urethane acrylic resin.

10. A method as claimed in any of claims 3 to 8, in which the monomer is or includes isobornyl acrylate and/or urethane methacrylate.

11. A method as claimed in any of claims 3 to 10, in which the polymer is or includes polyethylmethacrylate, polymethylmethacrylate, polyurethane, polyester acrylates and/or epoxy acrylates.

12. A method as claimed in any of claims 3 to 10, in which the polymer is or includes polyethylmethacrylate.

13. A method as claimed in any of the preceding claims, in which the radiation-curable adhesive ink composition additionally comprises, by weight of the total composition, from 1 to 10% of a silane coupling agent for glass.

14. A method as claimed in claim 13, in which the silane is or includes 3-glycidoxy-propyl trimethoxy silane.

15. A method as claimed in any of the preceding claims, in which the composition additionally comprises, by weight of the total composition, from 1 to 20% of pigment.

16. A method as claimed in any of the preceding claims, in which the pattern of decoration in radiation-curable adhesive ink is applied by a silk-screening process.

17. A method as claimed in any of the preceding claims, in which the compress employed is a roller.

18. A method as claimed in any of the preceding claims, in which the glass is in the form of a bottle.

**Patentansprüche**

1. Verfahren zur Applikation eines dekorativen Überzugs auf Glas, das die folgenden Stufen umfaßt:

    a) Applizieren einer Klebstoffdruckfarbe in Form einer durch Strahlung härtbaren Polymerzusammensetzung auf das Glas in einem vorgegebenen Dekorationsmuster;

    b) vollständiges Härten der Klebstoffdruckfarbe durch direktes Bestrahlen derselben auf dem Glas mit Strahlung, durch die die Druckfarbe härtbar ist, um die Druckfarbe an dem Glas zu binden;

    c) Pressen einer einen Film aus dekorativem Material tragenden Folie gegen das Glas mit einem auf eine Temperatur von mindestens 395 K (250°F) erwärmten Anpreßteil während ausreichender Zeit, um den Film des dekorativen Materials an dem gehärteten Druckfarbenmuster zum Haften zu bringen, und

    d) beim Entfernen des Anpreßteils Ablösen des Folie, wodurch der dekorative Film dauerhaft lediglich an dem Klebstoffdruckfarbenmuster haften bleibt.

2. Verfahren nach Anspruch 1, bei dem die verwendete Folie eine Heißprägegoldfolie oder eine Heißprägesilberfolie ist.

3. Verfahren nach Anspruch 1 oder Anspruch 2, wobei die durch Strahlung härtbare Klebstoffdruckfarbe ein Monomer, ein in dem Monomer gelöstes Polymer und einen durch Strahlung aktivierten Photostarter umfaßt.

4. Verfahren nach Anspruch 3, wobei der Photostarter ein durch aktinische Strahlung aktivierter Starter ist.

5. Verfahren nach Anspruch 3 oder Anspruch 4, wobei der Photostarter ein durch UV-Strahlung aktivierter Starter ist.

6. Verfahren nach einem der Ansprüche 3 bis 5, wobei der Photostarter aus den folgenden Bestandteilen besteht oder solche umfaßt: 1-Hydroxycyclohexylphenylketon, 2,2-Dimethoxy-2-phenylacetophenon, Diethoxyacetophenon und/oder 2-Methyl-1-(methylthiophenyl)-2-(4-morpholinyl)-1-propanon.

7. Verfahren nach einem der Ansprüche 3 bis 5, wobei der Photostarter 1-Hydroxycyclohexylphenylketon ist.

8. Verfahren nach einem der Ansprüche 3 bis 7, wobei die durch Strahlung härtbare Klebstoffdruckfarbezusammensetzung die folgenden Bestandteile umfaßt:

   a) 20-90% des Monomers;

   b) 10-35% des in dem Monomer gelösten Polymers und

   c) 3-10% des Photostarters,

   wobei alle Prozentangaben auf das Gewicht der Gesamtzusammensetzung bezogen sind.

9. Verfahren nach einem der Ansprüche 3 bis 8, wobei das Monomer Isobornylacrylat, Urethanmethacrylat, Urethanacrylat, Tetrahydrofurfurylacrylat, Acrylharze und/oder aromatische Urethanacrylharze umfaßt oder aus diesen besteht.

10. Verfahren nach einem der Ansprüche 3 bis 8, wobei das Monomer Isobornylacrylat und/oder Urethanmethacrylat umfaßt oder aus diesen besteht.

11. Verfahren nach einem der Ansprüche 3 bis 10, wobei das Polymer Polyethylmethacrylat, Polymethylmethacrylat, Polyurethan, Polyesteracrylate und/oder Epoxyacrylate umfaßt oder aus diesen besteht.

12. Verfahren nach einem der Ansprüche 3 bis 10, wobei das Polymer Polyethylmethacrylat umfaßt oder aus diesem besteht.

13. Verfahren nach einem der vorhergehenden Ansprüche, wobei die durch Strahlung härtbare Klebstoffdruckfarbezusammensetzung des weiteren 1 bis 10% eines Silankupplungsmittels für Glas, bezogen auf das Gewicht der Gesamtzusammensetzung, umfaßt.

14. Verfahren nach Anspruch 13, wobei das Silan 3-Glycidoxypropyltrimethoxysilan umfaßt oder aus diesem besteht.

15. Verfahren nach einem der vorhergehenden Ansprüche, wobei die Zusammensetzung des weiteren 1 bis 20% eines Pigments, bezogen auf die Gesamtzusammensetzung, umfaßt.

16. Verfahren nach einem der vorhergehenden Ansprüche, wobei das Dekorationsmuster in der durch Strahlung härtbaren Klebstoffdruckfarbe durch ein Siebdruckverfahren appliziert wird.

17. Verfahren nach einem der vorhergehenden Ansprüche, wobei das verwendete Anpreßteil eine Walze ist.

18. Verfahren nach einem der vorhergehenden Ansprüche, wobei das Glas die Form einer Flasche besitzt.

**Revendications**

1. Procédé pour l'application d'un revêtement décoratif sur du verre, qui comprend les étapes consistant :

   a) à appliquer sur le verre une encre adhésive sous la forme d'une composition polymère durcissable par irradiation, selon un schéma de décoration prédéterminé ;

b) à durcir complètement l'encre adhésive en l'exposant sur le verre à une irradiation directe par le rayonnement par lequel elle est durcissable, liant de ce fait l'encre au verre ;

c) à presser une feuille portant un film de matériau décoratif contre le verre avec une presse chauffée à une température d'au moins 395K (250°F) et suffisante pour coller le film de matériau décoratif sur le schéma d'encre durcie ; et

d) lors de l'enlèvement de la presse, à détacher la feuille, ce par quoi le film décoratif qui est dessus reste en permanence collé uniquement sur le schéma d'encre durcie.

2. Procédé selon la revendication 1, dans lequel la feuille utilisée est une feuille d'or à estampage à chaud ou une feuille d'argent à estampage à chaud.

3. Procédé selon la revendication 1 ou la revendication 2, dans lequel l'encre adhésive durcissable par irradiation comprend un monomère, un polymère dissous dans le monomère, et un photo-initiateur activé sous l'effet de rayonnements.

4. Procédé selon la revendication 3, dans lequel le photo-initiateur est un photo-initiateur activé par un rayonnement actinique.

5. Procédé selon la revendication 3 ou la revendication 4, dans lequel le photo-initiateur est un photo-initiateur activé par un rayonnement ultraviolet.

6. Procédé selon l'une quelconque des revendications 3 à 5, dans lequel le photo-initiateur est ou comprend : la 1-hydroxycyclohexylphénylcétone, la 2,2-diméthoxy-2-phénylacétophénone, la diéthoxyacétophénone et/ou la 2-méthyl-1(méthylthiophényl)-2-(4-morpholinyl)-1-propanone.

7. Procédé selon l'une quelconque des revendications 3 à 5, dans lequel le photo-initiateur est la 1-hydroxycyclohexylphénylcétone.

8. Procédé selon l'une quelconque des revendications 3 à 7, dans lequel la composition d'encre adhésive durcissable par irradiation comprend :

a) de 20 à 90% du monomère;
b) de 10 à 35% du polymère dissous dans le monomère ; et
c) de 3 à 10% du photo-initiateur;

tous ces pourcentages étant en poids de la composition totale.

9. Procédé selon l'une quelconque des revendications 3 à 8, dans lequel le monomère est ou comprend l'acrylate d'isobornyle, un méthacrylate d'uréthanne, un acrylate d'uréthanne, l'acrylate de tétrahydrofurfuryle, des résines acryliques et/ou une résine acrylique d'uréthanne aromatique.

10. Procédé selon l'une quelconque des revendications 3 à 8, dans lequel le mon-mère est ou comprend l'acrylate d'isobornyle et/ou un méthacrylate d'uréthanne.

11. Procédé selon l'une quelconque des revendications 3 à 10, dans lequel le polymère est ou comprend le polyméthacrylate d'éthyle, le polyméthacrylate de méthyle, un polyuréthanne, des poly(esters acryliques) et/ou des époxyacrylates.

12. Procédé selon l'une quelconque des revendications 3 à 10, dans lequel le polymère est ou comprend le polyméthacrylate d'éthyle.

13. Procédé selon l'une quelconque des revendications précédentes, dans lequel la composition d'encre adhésive durcissable par irradiation comprend de plus, en poids de la composition totale, de 1 à 10% d'un agent de couplage silane pour le verre.

14. Procédé selon la revendication 13, dans lequel le silane est ou comprend le 3-glycidoxy-propyltriméthoxysilane.

15. Procédé selon l'une quelconque des revendications précédentes, dans lequel la composition comprend de plus, en poids de la composition totale, de 1 à 20% de pigment.

**16.** Procédé selon l'une quelconque des revendications précédentes, dans lequel le schéma de décoration dans l'encre adhésive durcissable par irradiation est appliqué par un procédé d'impression sérigraphique.

**17.** Procédé selon l'une quelconque des revendications précédentes, dans lequel la presse employée est un rouleau.

**18.** Procédé selon l'une quelconque des revendications précédentes, dans lequel le verre a la forme d'une bouteille.